# EUROPEAN PATENT APPLICATION

(11) **EP 1 850 266 A2**
(43) Date of publication of application: **31.10.2007**
(21) Application number: 06008976.0
(22) Date of filing: 28.04.2006
(51) Int. Cl.: G06K 7/00, G07F 7/10, H04B 1/38, H01R 13/15

(54) **Smartcard reading/writing device**

(30) Priority: 24.04.2006 EP 06008433
(71) Applicant: Tyco Electronics Nederland B.V., 5222 AR 's-Hertogenbosch (NL)
(72) Inventor: Tuin, Jacobus Nicolaas, 5684 HC Best (NL)
(74) Representative: Grünecker, Kinkeldey, Stockmair & Schwanhäusser Anwaltssozietät

(57) **Abstract**

The present smart card reading/writing device comprises a main body (10) comprising an aperture (11) for introducing a smart card (1), a contacting element (2) connected to said main body (10) and comprising electrical contacts (5,5') for contacting corresponding terminals (6) arranged on the smart card (1). So as to improve the lifetime of the electrical contacts of the smart card reading/writing device and reduce the degradation of the terminals of the smart card during the contacting operation, the contacting element (2) is adapted to be moved along a surface (31,32,33) of said main body upon introduction of the smart card (1) into the main body (10) so that said electrical contacts (5,5') contact said corresponding terminals (6) arranged on the smart card (1).

## Description

The present invention relates to a smart card reading/writing device, a manufacturing method thereof and a method for contacting a smart card. Such a smart card reading/writing device comprises a main body comprising an aperture for introducing a smart card, a contacting element connected to said main body and comprising electrical contacts for contacting corresponding terminals arranged on the smart card.

Smart card reading/writing devices are used for reading/writing data in smart cards such as e.g. credit cards or integrated circuit cards. In conventional smart card reading/writing devices, electrical contacts contact corresponding terminals arranged on the smart card. So as to avoid frictions between the terminals of the smart card and the electrical contacts of the smart card reading/writing device, landing type electrical contacts are used, i.e. electrical contacts are raised until the smart card is fully inserted into the smart card reading/writing device, and then land on the chip card module area, thus preventing scratching the terminals on the smartcard. Indeed, in smart card reading/writing devices that do not employ landing type electrical contacts, the smart card wipes over the electrical contacts, thus wearing away the precious metal arranged on the chip card module and then starting wearing the base metal itself, eventually leading to a connector failure.

However, even when using a smart card reading/writing device with landing type electrical contacts, the electrical contacts wipe over a certain distance on the terminals of the smart card, said distance being referred to as the wipe length. In conventional smartcard reading/writing devices, even those employing landing type electrical contacts, the wipe length can still be relatively large, thus leading to a limited lifetime of the electrical contacts and a rapid degradation of the terminals of the smartcard.

Furthermore, the conventional IC-card reading/writing devices do not provide for enough protection against mechanical abuse or attack committed with the intention to illegally read or write data from/to the smartcard inserted in the reading/writing device. This is particular problematic in the case where the smart card is a credit cart that is inserted into a Point-Of-Sale terminal for a payment transaction. The practice has shown that the systems are not secure enough as they are not resistant against a mechanical attack in the form of a hole that is drilled on a front side of the smart card reader, and in which a wire is introduced so as to create an electrical contact with one of the input/output contacts, in view of tapping the information stream between the smart card and the paying terminal.

It is therefore an object of the present invention to provide a smart card reading/writing device, a manufacturing method thereof and a method for contacting a smart card that allow for improving the lifetime of the electrical contacts of the smart card reading/writing device and reducing the degradation of the terminals of the smart card during the contacting operation.

This object is solved by the subject matter of the independent claims. Preferred embodiments are subject matter of the dependent claims.

When the contacting element is adapted to be moved along a surface of the main body upon introduction of the smart card into the main body so that said electrical contacts contact said corresponding terminals arranged on the smart card, a very flexible connection can be established between the contacting element supporting the electrical contacts and the main body, which is a fixed element. The wipe length can thus be reduced to a very small distance, as small as 0.1 millimeter or even smaller. This allows for reducing the frictions between the electrical contacts and the corresponding terminals arranged on the smart card and thus leads to an improved durability of the electrical contacts. The number of mating cycles can thus be increased.

According to one embodiment of the invention, the contacting element comprises a second surface corresponding to said surface of said main body that is adapted to be moved along said surface of said main body, thereby bringing said electrical contacts of said contacting element in contact with said corresponding terminals arranged on the smart card. Hence, the contacting element comprising the electrical contacts is adapted to move along the surface of the main body upon insertion of the smart card into the main body to come into contact with the terminals of the smart card, thus landing on the terminals with a reduced wipe length.

In an advantageous embodiment of the invention, the surface of said main body and said second surface of said contacting element are sloped at a same angle.

According to a preferred embodiment of the invention, the contacting element further comprises a stopping end for stopping the introduction of the smart card into the main body at a pre-contacting position, where said electrical contacts are located in the vicinity of said corresponding terminals of the smart card without contacting them. Hence, the electrical contacts of the contacting element can be brought to a position close to the terminals of the smart card, without however contacting the terminals. When the contacting element is adapted to be moved along the surface of the main body from said pre-contacting position to a contacting position upon further introduction of the smart card to the main body, thereby bringing the electrical contacts in contact with the corresponding terminals arranged on the smart card, the smart card can be brought into contact with the contacting element by reducing a play that separated the contacting element and the smart card in the pre-contacting position.

It is particularly advantageous to overmold the electrical contacts in the contacting element, so as to produce the contacting element in a cost effective manner.

In an advantageous embodiment of the invention, the electrical contacts of the contacting element are prolongated by corresponding flexible leads that extend across the main body essentially perpendicularly to a direction of introduction of the smart card into the main body and the flexible leads protrude from said main body for mounting on a printed circuit board. This allows for obtaining a very flexible connection between the contacting element and the main body, as the flexible leads enable an easy translation movement along the surface of the main body. It is particularly advantageous to arrange the flexible leads so that the contacting element is movable along the surface of the main body. In particular, the orientation of the flexible leads with respect to a plane of the surface of the main body is chosen in such a way that a most flexible direction for bending the flexible leads is along the moving direction of the contacting element along the surface of the main body. When the flexible leads are chosen to have e.g. a rectangular section, it is particularly advantageous to orientate an axis of the wider section of the flexible leads essentially perpendicularly to the surface of the main body, as the flexible leads are more flexible along the surface of the main body with such an orientation in comparison with the situation where the axis of the wider section is oriented parallel to the surface of the main body.

According to yet another embodiment of the invention, the electrical contacts are arranged in two sets corresponding to an arrangement of the terminals on said smart card and said contacting element comprises two second surfaces corresponding to two surfaces of said main body that are adapted to be moved along said two surfaces of said main body.

The contacting element may comprise an additional second surface corresponding to an additional surface of said main body, said additional second surface being arranged between said two second surfaces and said additional surface of said main body being arranged between said two surfaces of said main body, and said additional second surface is adapted to be moved along said additional surface of said main body.

According to yet another preferred embodiment of the invention, the two sets of electrical contacts are prolongated by two sets of corresponding flexible leads that extend across said main body essentially perpendicularly to a direction of introduction of the smartcard into the main body and said two sets of corresponding flexible leads protrude from said main body for mounting on a printed circuit board.

The two sets of flexible leads are preferentially arranged so that said two second surfaces of said contacting element are movable along said two corresponding surfaces of said main body.

According to a preferred embodiment of the invention, the smart card reading/writing device further comprises a shielding plate that is arranged essentially parallel to a supporting surface for supporting the introduced smart card so that said flexible leads are enclosed between said shielding plate, said main body and a printed circuit board on which said main body is mountable. Hence, the flexible leads are protected by the shielding plate from potential mechanical attacks such as drilling, as the shielding plate allows for preventing the signals transported by the flexible leads from being tapped by an intruder. Even if a hole is drilled on the front side of the smart card reading/writing device and a wire introduced with the purpose of tapping the signals carried by the flexible leads, only an exterior flexible lead, that is closer to the front side of the smart card reading/writing device, is accessible. Since such flexible lead, according to the international specifications, is not meant to carry input/output signals, an intruder would therefore not be able to tap input/output information streams, thus making the smart card reading/writing device secure.

According to yet another embodiment of the smart card reading/writing device, the main body comprises a supporting surface for supporting the introduced smart card and a resilient element is arranged on the supporting surface for pushing the introduced smart card against the contacting element.

According to yet another embodiment of the invention, a method for manufacturing a smart card reading/writing device is provided, wherein said method comprises the steps of forming an aperture in a main body for introducing a smart card, forming a contacting element comprising electrical contacts for contacting corresponding terminals arranged on the smart card, and connecting said contacting element to said main body, wherein said contacting element is formed so that said contacting element is movable along a surface of said main body upon introduction of the smart card into the main body so that said electrical contacts contact said corresponding terminals arranged on the smart card.

According to a further embodiment of the invention, a method for contacting a smart card in a smart card reading/writing device is provided, wherein said method comprises the steps of introducing a smart card through an aperture formed in a main body of the smart card reading/writing device, and moving a contacting element along a surface of said main body upon introduction of the smart card into the main body, thereby contacting electrical contacts arranged on the contacting element with corresponding terminals arranged on the smart card.

The present invention will be described in detail in the following based on the figures enclosed with this application.
**Fig. 1** is a perspective view of a smart card reading/writing device in a mounted position with a printed circuit board before insertion of a smart card;
**Fig. 2** is a perspective view of the smart card reading/writing device shown in Fig. 1 after complete insertion of a smart card;
**Fig. 3** is a perspective view of the smart card reading/writing device shown in Fig. 1 that shows its internal structure before insertion of a smart card;
**Fig. 4** is a perspective view of the smart card reading/writing device shown in Fig. 1 that shows its internal structure after complete insertion of a smart card;
**Fig. 5** is a perspective view of a smart card reading/writing device according to one embodiment of the invention, shown before insertion of a smart card;
**Fig. 6** is a perspective view of the smart card reading/writing device shown in Fig. 5 after complete insertion of a smart card;
**Fig. 7** is a perspective view of a contacting element arranged on an introduced smart card before a complete introduction of the smart card into the smart card reading/writing device;
**Fig. 8** is a perspective view of the contacting element shown in Fig. 7 after complete introduction of the smart card into the smart card reading/writing device;
**Fig. 9** is a perspective view of a cross-section through the contacting element;
**Fig. 10** is a perspective view of a cross-section through the contacting element during introduction of a smart card;
**Fig. 11** is a perspective view of a cross-section through the contacting element upon introduction of the smart card until a pre-contacting position;
**Fig. 12** is a perspective view of a cross-section through the contacting element after a complete introduction of the smart card into the smart card reading/writing device;
**Fig. 13** is a perspective view of the smart card reading/writing device according to one embodiment of the invention;
**Fig. 14** is a perspective view of the smart card reading/writing device shown in Fig. 13 without its main body;
**Fig. 15** is another perspective view of the smart card reading/writing device shown in Fig. 14;
**Fig. 16** is a perspective view of a front side of the smart card reading/writing device according to one embodiment of the invention;
**Fig. 17** is a perspective view of a cross-section through the smart card reading/writing device shown in Fig. 16;
**Fig. 18** is a perspective view of a smart card reading/writing device showing the bottom side of the contacting element.

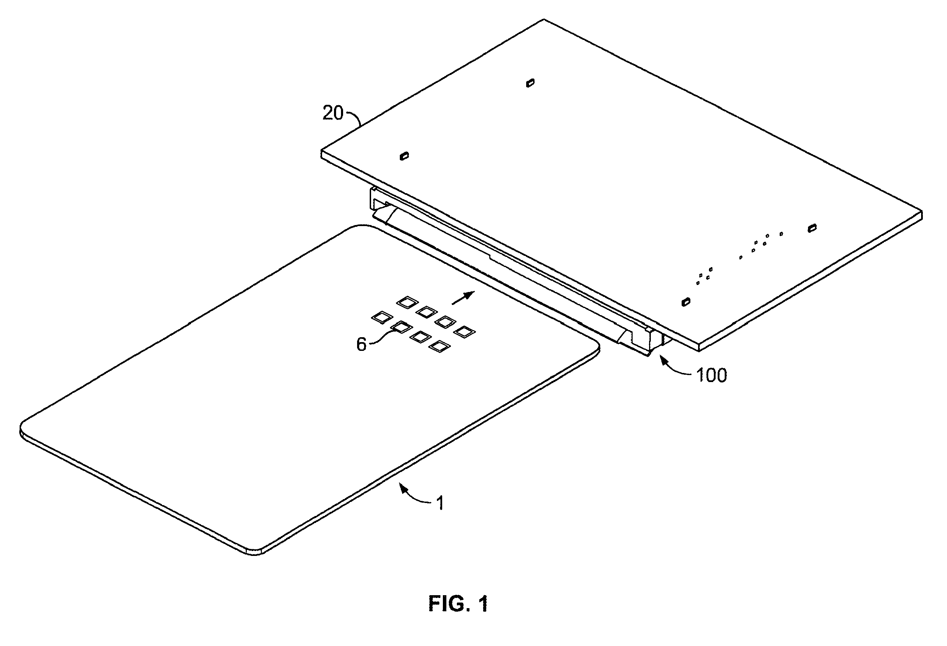

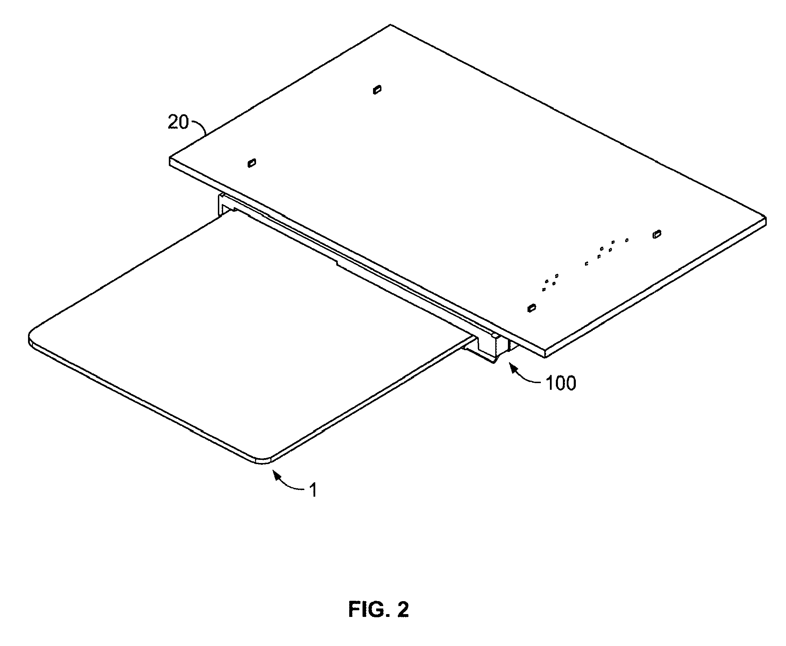

Fig. 1 is a perspective view of a smart card reading/writing device 100 that is mounted with a printed circuit board 20, before a smart card 1 is introduced into the smart card reading/writing device 100. The smartcard 1 comprises terminals 6 arranged on its upper surface that are read by electrical contacts of the smart card reading/writing device 100. Figure 2 is a perspective view of the smart card reading/writing device 100 when the smart card 1 is introduced therein.

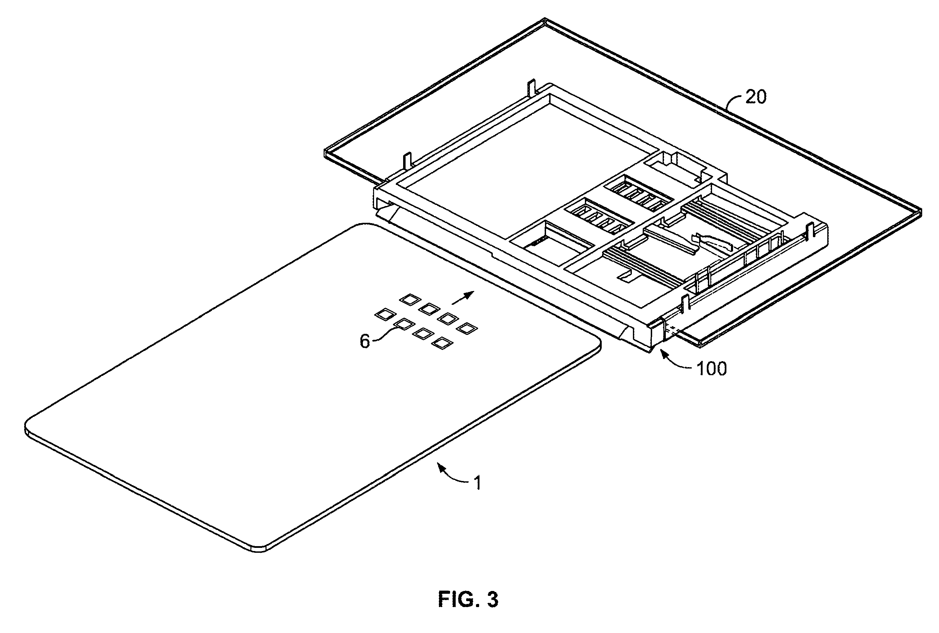

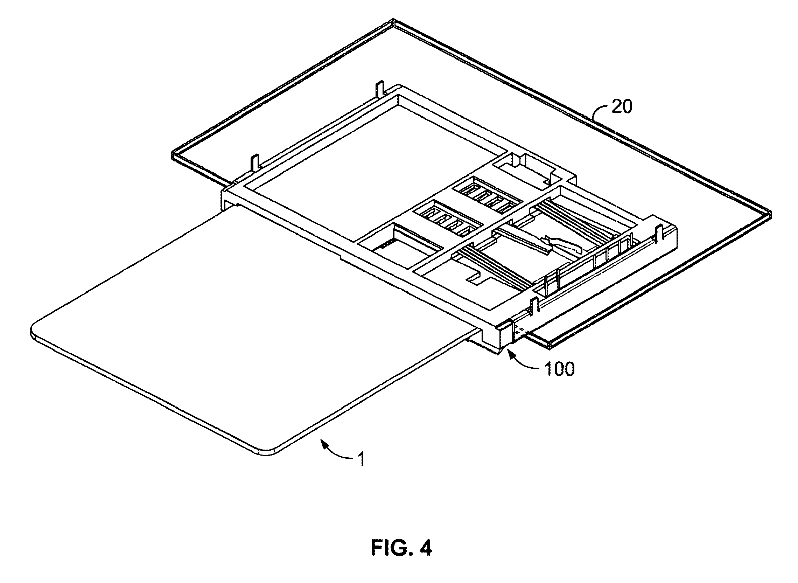

Fig. 3 is a perspective view showing the internal structure of the smart card reading/writing device 100 according to one embodiment of the invention, before a smart card 1 has been introduced therein. Fig. 4 is a perspective view of the smart card reading/writing device 100 showing the internal structure of the smart card reading/writing device 100 when the smart card 1 has been introduced therein.

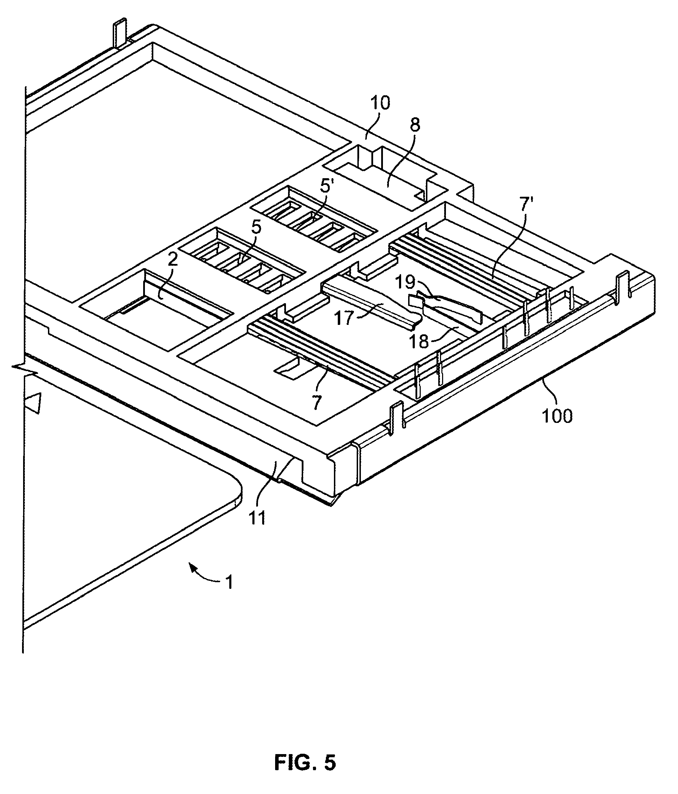

Fig. 5 is a perspective view of a smart card reading/writing device 100 according to one embodiment of the invention, when the smart card reading/writing device 100 is not mounted with a printed circuit board. The smart card reading/writing device 100 comprises a main body 10 comprising an aperture 11 for introducing a smart card 1. The smart card reading/writing device 100 further comprises a contacting element 2 that is connected to the main body 10. The contacting element 2 comprises electrical contacts 5, 5' for contacting the corresponding terminals of the smart card 1. The electrical contacts 5, 5' of the contacting element 2 are prolongated by corresponding flexible leads 7, 7' that extend across the main body 10 essentially perpendicularly to the direction of introduction of the smart card 1 into the main body 10. The flexible leads 7, 7' are over-molded and then mounted in the main body 10, so that they protrude from the main body 10 for mounting on a printed circuit board (not shown in this figure). The contacting element 2 further comprises a contacting plate 17 that protrudes from the contacting element 2 and whose end is positioned in the vicinity of a first contact element 18 without contacting it, said first contact element 18 being an over-molded part that is arranged on the main body 10. A second contact element 19 is arranged on the main body 10 next to the first contact element 18. The first contact element 18 and the second contact element 19 form a switch that is closed when the smart card 1 is fully introduced into the smart card reading/writing device.

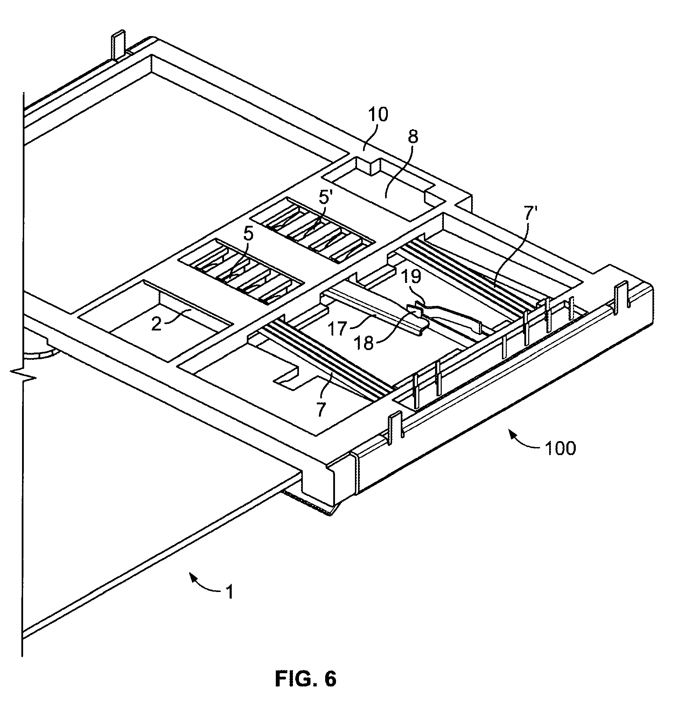

Fig. 6 shows a perspective view of the smart card reading/writing device 100 when the smart card 1 is introduced therein completely. Upon introduction of the smart card 1 into the main body 10 of the smart card reading/writing device 100, the contacting element 2 is moved along the direction of introduction of the smart card 1. The flexible leads 7 are arranged in such a way that the contacting element 2 is movable with respect to the fixed main body 10 of the smart card reading/writing device 100. In comparison with Fig. 5, the contacting element 2 is shown in Fig. 6 in a shifted position with respect to the direction of introduction of the smart card 1 into the main body 10. An end 8 of the contacting element 2 is shown in Fig. 6 to be in contact with the main body 10, whereas in Fig. 5 the end 8 of the contacting element 2 and the main body 10 were spaced from each other.

Upon a complete introduction of the smart card 1 into the smart card reading/writing device 100, the contacting plate 17 is moved into contact with the first contact element 18. By contacting the first contact element 18, the contacting plate 17 forces the first contact element 18 in contact with the second contact element 19, thus closing the switch and indicating that the smart card 1 has been completely introduced into the smart card reading/writing device.

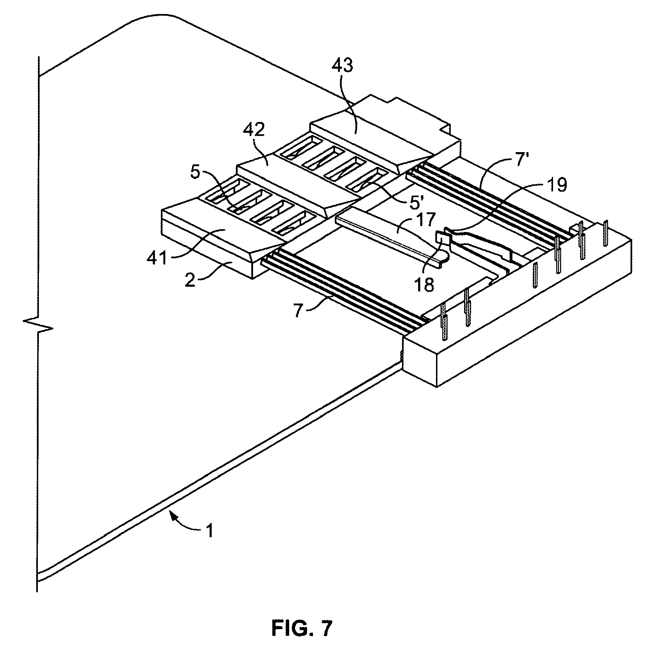

Fig. 7 is a perspective view showing the contacting element 2 in a pre-contacting position, where the electrical contacts 5, 5' of the contacting element 2 are located in a vicinity of the corresponding terminals 6 of the smart card 1 without contacting them. The contacting element 2 comprises surfaces 41, 42, 43 that can be moved along corresponding surfaces (not shown) of the main body 10 to enable contacting between the electrical contacts 5, 5' and the terminals 6 of the smart card 1. The surface 42 is arranged between the surfaces 41, 43 that are arranged on both sides of the contacting element 2. The surfaces 41, 42, 43 of the contacting element 2 are preferentially planar surfaces that are sloped at an angle with the main plane of the contacting element 2.

Even though the figures enclosed with this application only show the case of the surfaces 41, 42, 43 being planar sloped surfaces, other surface shapes, such as slightly convex surfaces, may be considered, as long as the chosen surface shape allows for an easy translation movement of the contacting element 2 with respect to the main body 10. Furthermore, even though the particular example of three surfaces being arranged on the contacting element 2 is described in this application, it may also be considered to foresee only one surface on the contacting element 2 that is adapted to be moved along a corresponding surface of the main body 10. In fact, an arbitrary number of surfaces may be foreseen on the contacting element 2 that are adapted to be moved along corresponding surfaces of the main body 10.

The electrical contacts are arranged in two sets 5, 5' that are provided in two corresponding sets of slots foreseen respectively between the first surface 41 and the second surface 42, and between the second surface 42 and the third surface 43 of the contacting element 2. The arrangement of the electrical contacts 5, 5' corresponds to an arrangement of the terminals 6 on the smart card 1.

Even though the particular example of two sets 5, 5' of electrical contacts being foreseen respectively between a first surface 41 and a second surface 42, and between the second surface 42 and a third surface 43 of the contacting element 2 is described in this application, another arrangement may also be considered. For instance, the two sets of electrical contacts may also be provided between two surfaces of the contacting element 2 that are arranged on both sides thereof. Other arrangements will be apparent to those skilled in the art.

The two sets of electrical contacts 5, 5' are prolongated by two corresponding sets of flexible leads 7, 7' that extend across the main body 10 essentially perpendicularly to a direction of introduction of the smart card 1 into the main body 10. The two sets of corresponding flexible leads 7, 7' are over-molded parts mounted in the main body 10 so that they protrude from the main body 10 for mounting on a printed circuit board (not shown). The flexible leads 7, 7' are arranged in such a way that the contacting element 2 is movable along surfaces corresponding to the surfaces 41, 42, 43 of the contacting element 2. In case the surfaces 41, 42, 43 of the contacting element 2 are foreseen as planar surfaces sloped at an angle with a main plane of the contacting element 2, the flexible leads 7, 7' are oriented essentially perpendicularly to the plane of the surfaces 41, 42, 43. The surfaces 41, 42, 43 of the contacting element 2 are thus easily movable along the plane of the surfaces 41, 42, 43 since the flexible leads 7, 7' are oriented to facilitate a flexible movement along this plane.

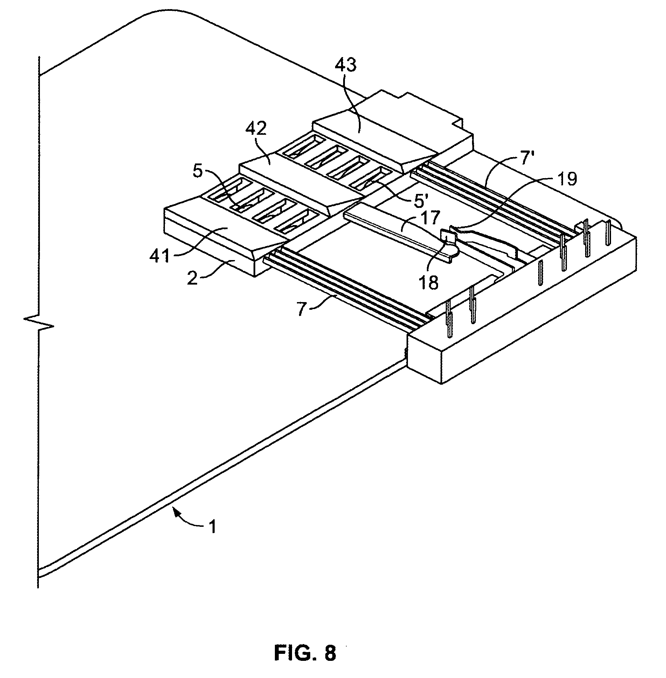

Fig. 8 is a perspective view of the contacting element 2 in a contacting position, where the electrical contacts 5, 5' contact the corresponding terminals 6 of the smart card 1. It shows the contacting element 2 after its surfaces 41, 42, 43 have moved along corresponding surfaces of the main body 10 (not shown). When moving from the pre-contacting position shown in Fig. 7 to the contacting position shown in Fig. 8, the contacting element 2 is moved downward in the direction of the smart card 1 and forward in the direction of introduction of the smart card 1, this composite movement being performed along the planes of the surfaces 41, 42, 43 of the contacting element 2.

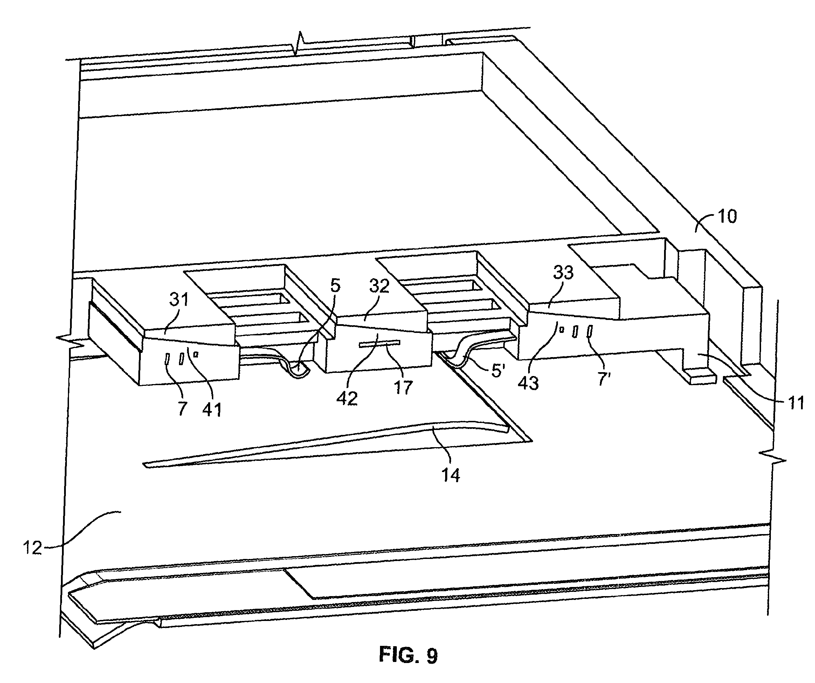

Fig. 9 is a perspective view of a cross-section through a smart card reading/writing device according to one embodiment of the invention. The main body 10 comprises surfaces 31, 32, 33 that correspond to respective surfaces 41, 42, 43 of the contacting element 2. The surfaces 31, 32, 33 of the main body 10 are adapted to be moved along the corresponding surfaces 41, 42, 43 of the contacting element 2. The contacting element 2 comprises a stopping end 11 shown on the right-hand side of Fig. 9. Since no smart card 1 is inserted into the smart card reading/writing device in Fig. 9, the stopping end 11 of the contacting element 2 is separated from the main body 10 by a spacing. Fig. 9 also shows cross-sections of the flexible leads 7, 7' that prolongate the respective electrical contacts 5, 5' and that are embedded within the contacting element 2. It also shows a cross-section of the contacting plate 17 that is embedded within the contacting element 2.

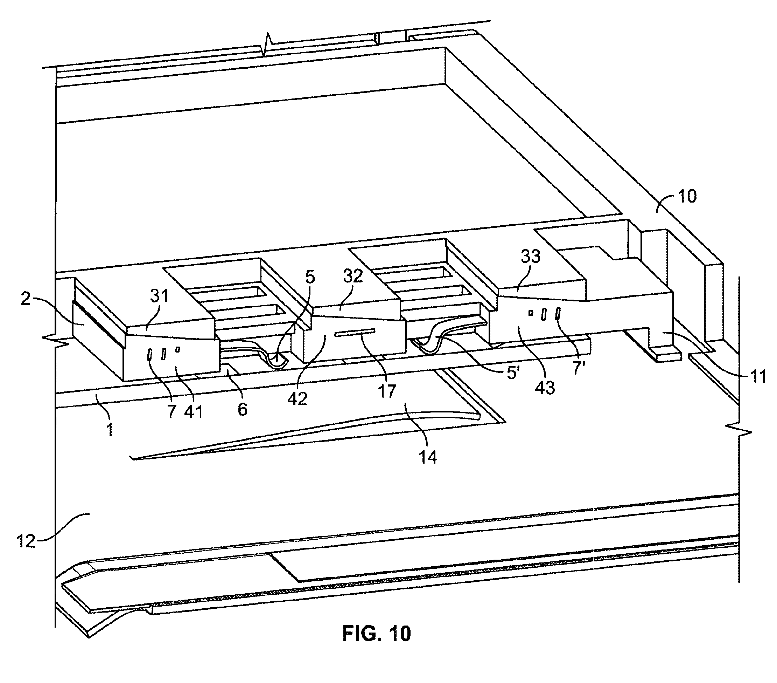

Fig. 10 is a perspective view corresponding to the one shown in Fig. 9, wherein a smart card 1 is partially inserted into the smart card reading/writing device. The smart card 1 is introduced into the main body 10 between the contacting element 2 and a supporting surface 12 for supporting the introduced smart card 1. A resilient element 14, such as a spring, is foreseen in the supporting surface 12, which pushes the introduced smart card 1 towards the contacting element 2. As the smart card 1 is only partially inserted, there is some play between the contacting element 2 and the introduced smart card 1, as well as between the electrical contacts 5, 5' and the smart card 1.

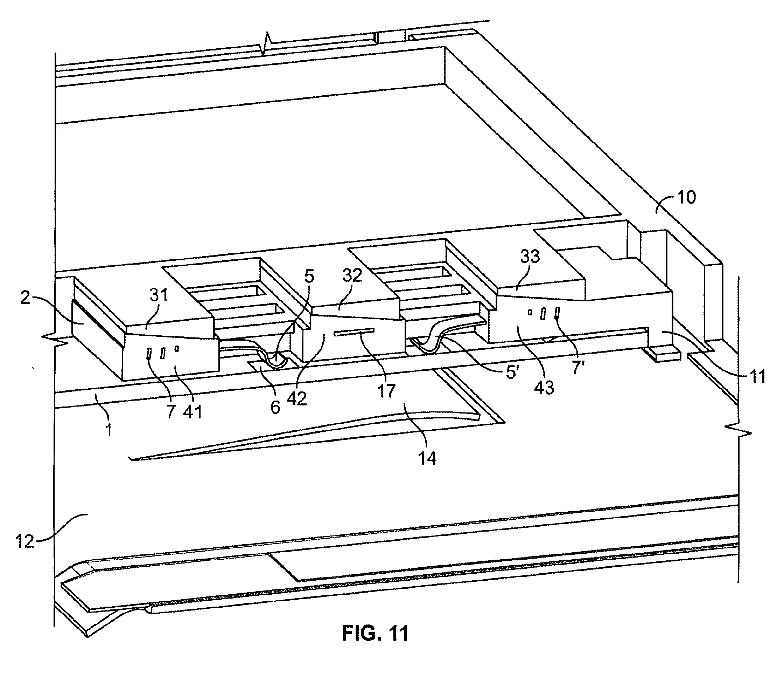

Fig. 11 shows a perspective view of a cross-section of the smart card reading/writing device corresponding to Figs. 9 and 10, wherein the smart card 1 is introduced into the main body 10 until the forward edge of the smart card 1 has reached a stopping end 11 of the contacting element 2. The smart card 1 is still partially inserted into the main body 10 of the smart card reading/writing device as there is a spacing between the stopping end 11 of the contacting element 2 and the main body 10. Further, there is still a spacing between the smart card 1 and the contacting element 2 as well as between the electrical contacts 5, 5' and the terminals 6 of the smart card 1.

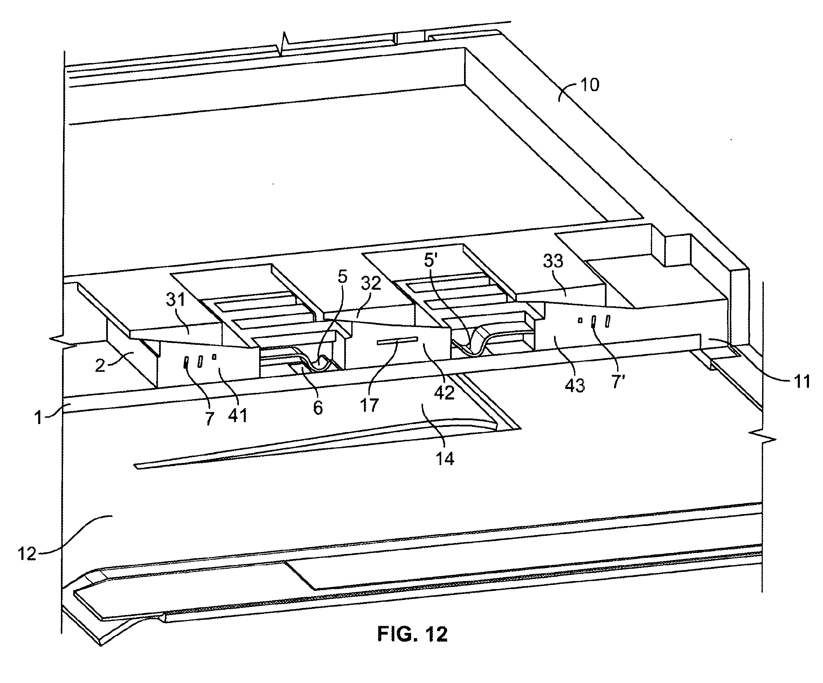

Fig. 12 is a perspective view of a cross-section of the smart card reading/writing device corresponding to Figs. 9, 10 and 11, wherein the smart card 1 is completely inserted into the main body 10 of the smart card reading/writing device. It shows that the contacting element 2 has moved with respect to the main body 10 from the pre-contacting position shown in Fig. 11 to a contacting position, where the electrical contacts 5, 5' contact the corresponding terminals 6 of the smart card 1 and the smart card 1 is in direct contact with the contacting element 2, i.e. there is no play between them anymore. To move from the pre-contacting position to the contacting position, the surfaces 41, 42, 43 of the contacting element 2 are moved along the corresponding surfaces 31, 32, 33 of the main body 10, thereby making the contacting element 2 to move downwards towards the introduced smart card 1 and forward until the end of the contacting element 2 is in contact with the main body 10.

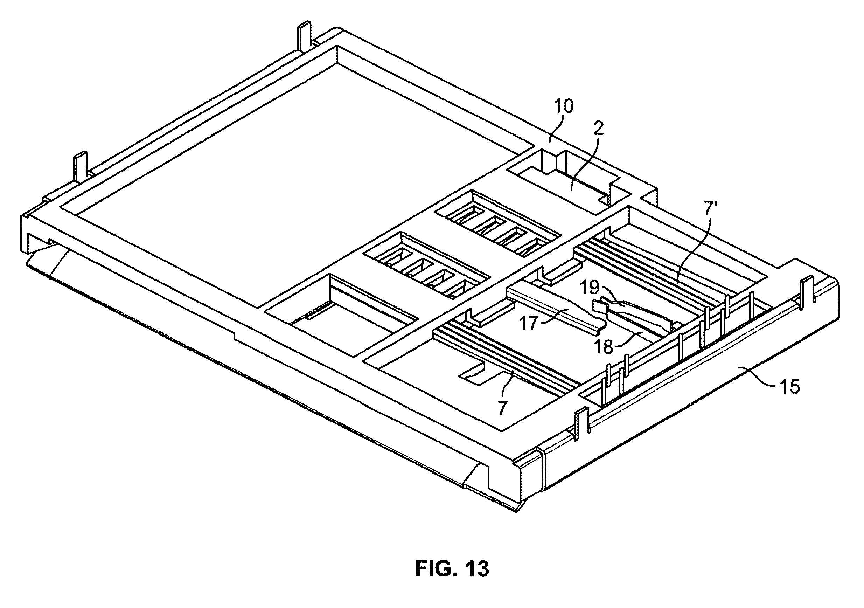

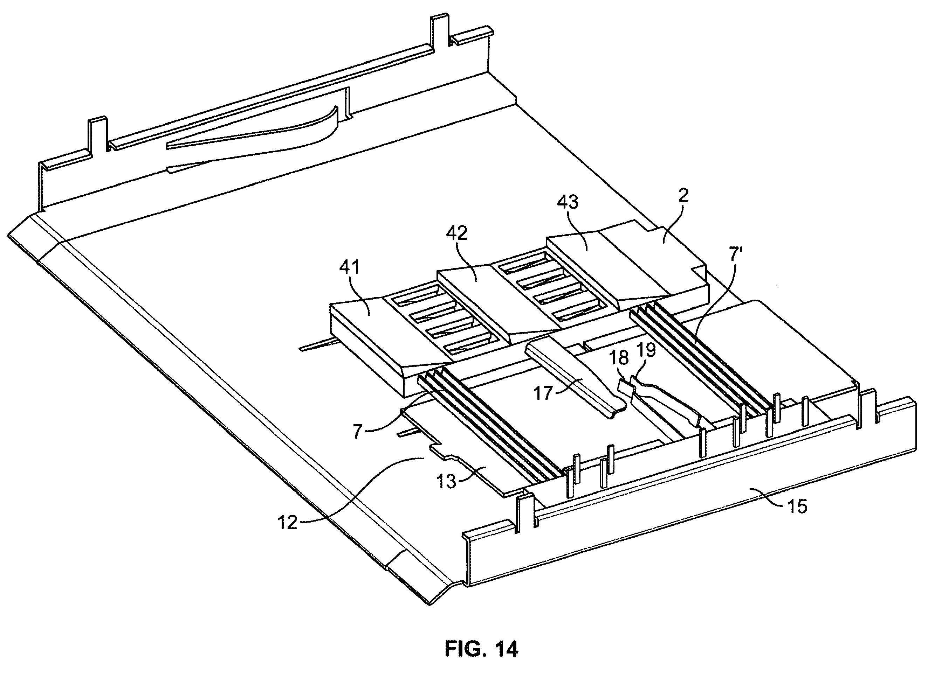

Fig. 13 shows a perspective view of the smart card reading/writing device according to one embodiment of the invention. The main body 10 of the smart card reading/writing device is mounted in a cover 15. Fig. 14 shows a perspective view of the smart card reading/writing device, wherein the main body 10 has been removed. It shows a shielding plate 13 that is arranged parallel to the supporting surface 12. The shielding plate is arranged so that the flexible leads 7, 7' are enclosed between the shielding plate 13, the main body 10 and the printed circuit board 20 in a mounted position of the smart card reading/writing device. The shielding plate 13 thus allows for protecting the flexible leads 7 from mechanical attacks with the purpose of tapping information streams carried by the flexible leads 7, 7'. Even though the shielding plate 13 is described as a metal plate being an element that is separate from the main body 10, it may also be considered to foresee the shielding plate 13 as a plastic part that is an integral part of the main body 10.

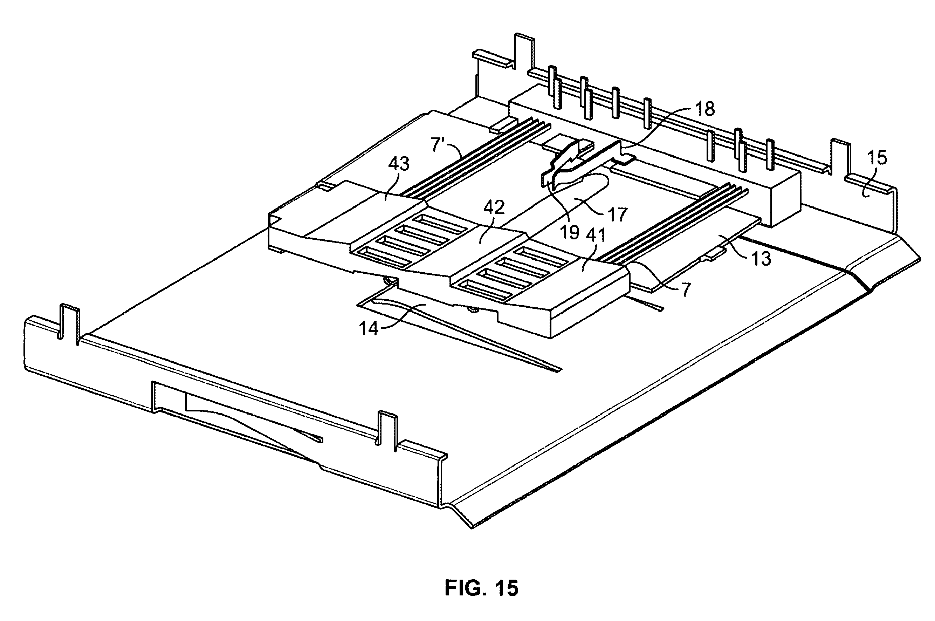

Fig. 15 shows another perspective view of the smart card reading/writing device shown in Fig. 14.

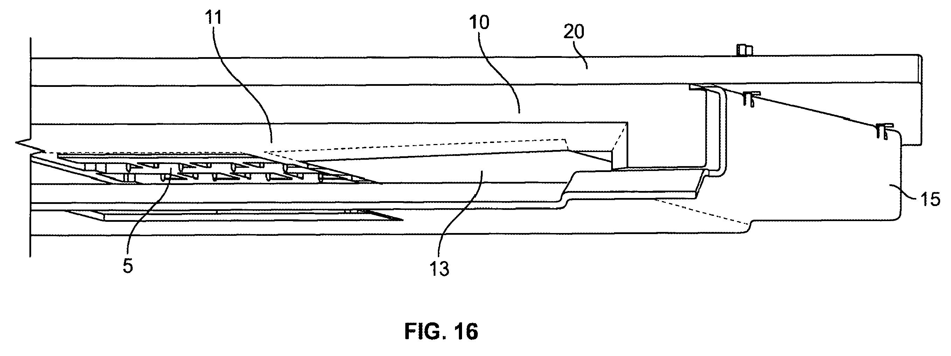

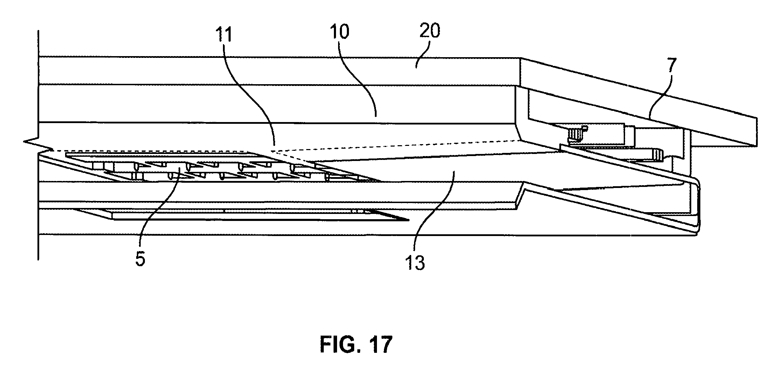

Fig. 16 shows a perspective view from the front side of the smart card reading/writing device that is mounted on a printed circuit board 20. Fig. 17 shows a perspective view of a cross-section through the smart card reading/writing device shown in Fig. 16. It shows that the flexible leads 7, 7' are completely enclosed between the shielding plate 13, the main body 10 and the printed circuit board 20.

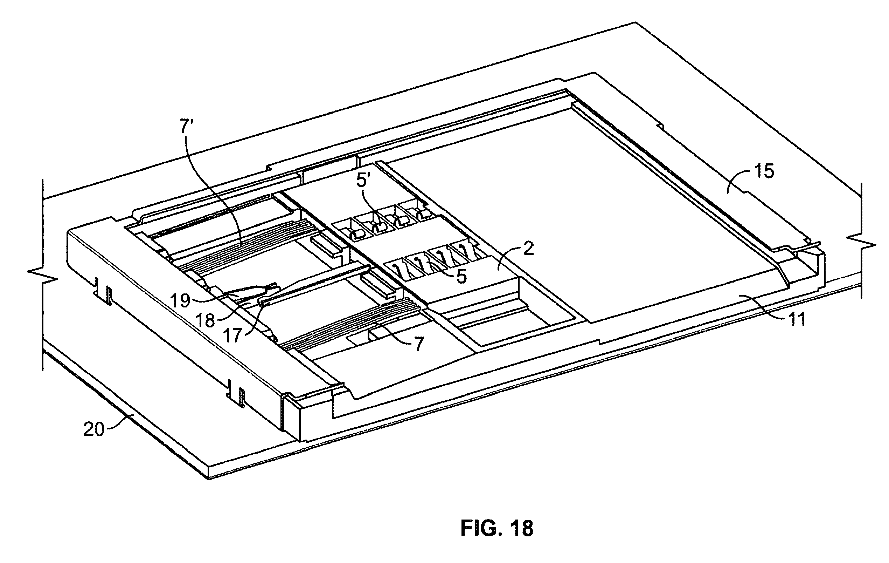

Fig. 18 is a perspective view of a smart card reading/writing device according to an embodiment of the invention, wherein the cover 15 has been partially removed. The perspective view shows the bottom side of the smart card reading/writing device, thus unveiling the bottom side of the contacting element 2. It shows the electrical contacts 5, 5' that are meant to contact the terminals of a smart card 1 introduced into the smart card reading/writing device.

## Claims

1. A smart card reading/writing device comprising:
a main body (10) comprising an aperture (11) for introducing a smart card (1),
a contacting element (2) connected to said main body (10) and comprising electrical contacts (5, 5') for contacting corresponding terminals (6) arranged on the smart card (1),
wherein said contacting element (2) is adapted to be moved along a surface (31, 32, 33) of said main body (10) upon introduction of the smart card (1) into the main body (10) so that said electrical contacts (5, 5') contact said corresponding terminals (6) arranged on the smart card (1).

2. The smart card reading/writing device according to claim 1, wherein said contacting element (2) comprises a second surface (41, 42, 43) corresponding to said surface (31, 32, 33) of said main body (10) that is adapted to be moved along said surface (31, 32, 33) of said main body (10), thereby bringing said electrical contacts (5, 5') of said contacting element (2) in contact with said corresponding terminals (6) arranged on the smart card (1).

3. The smart card reading/writing device according to claim 2, wherein said surface (31, 32, 33) of said main body (10) and said second surface (41, 42, 43) of said contacting element (2) are sloped at a same angle.

4. The smart card reading/writing device according to one of claims 1 to 3, wherein said contacting element (2) further comprises a stopping end (11) for stopping the introduction of the smart card (1) into the main body (10) at a pre-contacting position, where said electrical contacts (5, 5') are located in the vicinity of said corresponding terminals (6) of the smart card (1) without contacting them.

5. The smart card reading/writing device according to claim 4, wherein said contacting element (2) is adapted to be moved along said surface (31, 32, 33) of said main body (10) from said pre-contacting position to a contacting position upon further introduction of the smart card (1) into the main body (10), thereby bringing said electrical contacts (5, 5') in contact with said corresponding terminals (6) arranged on the smart card (1).

6. The smart card reading/writing device according to one of claims 1 to 5, wherein said electrical contacts (5, 5') are over-moulded in said contacting element (2).

7. The smart card reading/writing device according to one of claims 1 to 6, wherein said electrical contacts (5, 5') of said contacting element (2) are prolongated by corresponding flexible leads (7, 7') that extend across said main body (10) essentially perpendicularly to a direction of introduction of the smart card (1) into the main body (10) and said flexible leads (7, 7') protrude from said main body (10) for mounting on a printed circuit board (20).

8. The smart card reading/writing device according to claim 7, wherein said flexible leads (7, 7') are arranged so that said contacting element (2) is moveable along said surface (31, 32, 33) of said main body (10).

9. The smart card reading/writing device according to one of claims 7 or 8, wherein an orientation of said flexible leads (7, 7') with respect to a plane of said surface (31, 32, 33) of said main body (10) is such that a most flexible direction for bending said flexible leads (7, 7') is along a moving direction of said contacting element (2) along said surface (31, 32, 33) of said main body (10).

10. The smart card reading/writing device according to one of claims 1 to 9, wherein said electrical contacts are arranged in two sets (5, 5') corresponding to an arrangement of said terminals (6) on said smart card (1) and said contacting element (2) comprises two second surfaces (41, 43) corresponding to two surfaces (31, 33) of said main body (10) that are adapted to be moved along said two surfaces (31, 33) of said main body (10).

11. The smart card reading/writing device according to claim 10, wherein said contacting element (2) comprises an additional second surface (42) corresponding to an additional surface (32) of said main body (10), said additional second surface (42) being arranged between said two second surfaces (41, 43) and said additional surface (32) of said main body (10) being arranged between said two surfaces (31, 33) of said main body (10), and said additional second surface (42) is adapted to be moved along said additional surface (32) of said main body (10).

12. The smart card reading/writing device according to one of claims 10 or 11, wherein said two sets of electrical contacts (5, 5') are prolongated by two sets of corresponding flexible leads (7, 7') that extend across said main body (10) essentially perpendicularly to a direction of introduction of the smart card (1) into the main body (10) and said two sets of corresponding flexible leads (7, 7') protrude from said main body (10) for mounting on a printed circuit board (20).

13. The smart card reading/writing device according to claim 12, wherein said two sets of flexible leads (7, 7') are arranged so that said two second surfaces (41, 43) of said contacting element (2) are movable along said two corresponding surfaces (31, 33) of said main body (10).

14. The smart card reading/writing device according to one of claims 12 or 13, wherein an orientation of said two sets of flexible leads (7, 7') with respect to a plane of said surface (31, 32, 33) of said main body (10) is such that a most flexible direction for bending said two sets of flexible leads (7, 7') is along a moving direction of said contacting element (2) along said surface (31, 32, 33) of said main body (10).

15. The smart card reading/writing device according to one of claims 7 to 14, further comprising a shielding plate (13) that is arranged essentially parallel to a supporting surface (12) for supporting the introduced smart card (1) so that said flexible leads (7, 7') are enclosed between said shielding plate (13), said main body (10) and a printed circuit board (20) on which said main body (10) is mountable.

16. The smart card reading/writing device according to one of claims 1 to 15, wherein said main body (10) comprises a supporting surface (12) for supporting the introduced smart card (1) and a resilient element (14) is arranged on said supporting surface (12) for pushing the introduced smart card (1) against said contacting element (2).

17. Method for manufacturing a smart card reading/writing device, said method comprising the following steps:
forming an aperture (11) in a main body (10) for introducing a smart card (1),
forming a contacting element (2) comprising electrical contacts (5, 5') for contacting corresponding terminals (6) arranged on the smart card (1), and
connecting said contacting element (2) to said main body (10),
wherein said contacting element (2) is formed so that said contacting element (2) is moveable along a surface of said main body (10) upon introduction of the smart card (1) into the main body (10) so that said electrical contacts (5, 5') contact said corresponding terminals (6) arranged on the smart card (1).

18. Method for contacting a smart card in a smart card reading/writing device, said method comprising the following steps:
introducing a smart card (1) through an aperture (11) formed in a main body (10) of the smart card reading/writing device, and
moving a contacting element (2) along a surface of said main body (10) upon introduction of the smart card (1) into the main body (10), thereby contacting electrical contacts (5, 5') arranged on the contacting element (2) with corresponding terminals (6) arranged on the smart card (1).
